(19) Europäisches Patentamt
European Patent Office
Office européen des brevets

(11) Veröffentlichungsnummer: **0 218 173**
**A2**

(12) # EUROPÄISCHE PATENTANMELDUNG

(21) Anmeldenummer: **86113405.4**

(22) Anmeldetag: **30.09.86**

(51) Int. Cl.⁴: **C 08 F 291/02**, C 08 L 25/04, C 08 L 33/10, C 08 L 27/06, C 08 L 51/04

(30) Priorität: **09.10.85 DE 3535983**

(43) Veröffentlichungstag der Anmeldung: **15.04.87 Patentblatt 87/16**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Lindner, Christian, Dr., Riehlerstrasse 200, D-5000 Köln 60 (DE)**
Erfinder: **Wittmann, Dieter, Dr., Doerperhofstrasse 15, D-4150 Krefeld 1 (DE)**
Erfinder: **Kress, Hans-Jürgen, Dr., Scheiblerstrasse 111, D-4150 Krefeld 1 (DE)**

(54) **Thermoplastische Pfropfpolymerisate.**

(57) Verbesserte thermoplastische Pfropfpolymerisate mit eingebauten langkettigen Kohlenwasserstoffresten.

EP 0 218 173 A2

0218173

BAYER AKTIENGESELLSCHAFT 5090 Leverkusen, Bayerwerk
Konzernverwaltung RP
Patentabteilung G/bo/c

# Thermoplastische Propfpolymerisate

Die Erfindung betrifft verbesserte thermoplastische Pfropfpolymerisate mit eingebauten langkettigen Kohlenwasserstoffresten.

Pfropfpolymerisate von harzbildenden Monomeren auf Elastomeren als Pfropfgrundlage haben große Bedeutung als thermoplastische Formmassen. Solche Pfropfpolymerisate sind z.B. in den bekannten "ABS"-, "MBS"-, "HIPS"- und "ASA"-Formmassen enthalten.

Unter "ABS-Formmassen" werden hier Pfropfpolymerisate von Acrylnitril, dessen Derivaten oder ähnlichen Monomeren und Styrol oder dessen Derivaten auf Poly-Butadien oder anderen Dienkautschuken, sowie deren Gemische mit Copolymerisaten aus harzbildenden Monomeren vom Typ Acrylnitril und Styrol verstanden. In "MBS-Formmassen" ist das Acrylnitril durch Methylmethacrylat ersetzt. "HIPS" (High Impact Polystyrene) enthält nur Styrol auf einen Dienkautschuk polymerisiert, mit "ASA" bezeichnet man mit Acrylnitril/Styrol gepfropfte Acrylatkautschuke.

In allen diesen Formmassen bewirkt der Kautschuk (oder das Elastomer) eine Verbesserung der Bruchfestigkeit unter praxisnaher Beanspruchung (d.h. der Schlagzähigkeit): andere wichtige Eigenschaften wie Härte, Steifigkeit, Verarbeitbarkeit, Wärmeformbeständigkeit, Verarbeitungs- und Thermostabilität können allerdings durch den Kautschuk auch verschlechtert werden.

Es wurde gefunden, daß thermoplastische Pfropfpolymerisate bessere Eigenschaften besitzen, wenn ein Teil der auf den Kautschuk pfropfpolymerisierten, harzbildenden Monomeren lange Alkylreste enthält. Insbesondere wird die Verarbeitbarkeit und die Farbe des rohen Materials (Rohton) ohne Einbuße an Schlagzähigkeit verbessert. Die Einarbeitung von üblichen Füllstoffen wird erleichtert. Im allgemeinen findet man bei den erfindungsgemäßen Pfropfpolymerisaten und daraus erhaltenen Formmassen eine verbessertes Gesamtniveau relevanter anwendungstechnischer Eigenschaften.

Gegenstand der Erfindung sind somit thermoplastische Propfpolymerisate aus einem Kautschuk mit Glasübergangstemperaturen <0° C als Propfgrundlage und einem darauf polymerisierten Harz aus wenigstens einem Monomeren der Formel (I) oder (II),

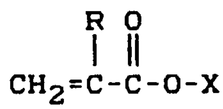

(I)

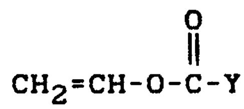

(II)

wobei R = H, $CH_3$

X,Y = $C_{14}$ - $C_{33}$ - Alkyl

und wenigstens einem weiteren Vinylmonomeren.

Bevorzugte erfindungsgemäße Pfropfpolymerisate enthalten als Pfropfgrundlage einen teilchenförmigen, wenigstens partiell vernetzten Kautschuk mit mittleren Teilchendurchmessern von 0,05 - 8 µm, insbesondere 0,1 - 0,8 um-($d_{50}$-Werte).

Besonders bevorzugte Pfropfpolymerisate bestehen aus 10 - 80, insbesondere 50 - 80 Gew.-Teilen Pforpfgrundlage und 90 - 20, insbesondere 50 - 20 Gew.-Teilen aufpolymerisiertem Harz, wobei das Harz aus 1 - 50, insbesondere 2 - 20 Gew.-% von polymerisierten Einheiten wenigstens eines Monomeren (I) oder (II) und aus 99 - 50, insbesondere 98 - 80 Gew.-% von polymerisierten Einheiten wenigstens eines weiteren Vinylmonomeren besteht.

Weitere Vinylmonomere in diesem Sinne sind vorzugsweise Styrol, α-Methylstyrol, Acrylnitril, Methacrylnitril, Acrylsäureester mit bis zu 12 C-Atomen in der Alkoholgruppe, Methacrylsäureester mit bis zu 12 C-Atomen in der

in der Alkoholgruppe, Vinylester von $C_1$ -$C_6$-Carbonsäuren, Methacrylsäure, Maleinsäureanhydrid oder Maleinsäureimide, besonders bevorzugt sind Styrol, α-Methylstyrol, Acrylnitril und Methacrylsäureester.

Ein weiterer Gegenstand der Erfindung sind thermoplastische Formmassen aus 5 - 95 Gew.-Teilen eines thermoplastischen Harzes, nämlich eines Styrolhomo- oder -copolymerisats, eines Methylmethacrylat-Homo- oder -copolymerisates oder eines Vinylchloridhomo- oder -copolymerisates und 95 -5 Gew.-Teilen eines erfindungsgemäßen Pfropfpolymerisates; besonders bevorzugte thermoplastische Harze im Sinne der Erfindung sind Styrol-Acrylnitril-Copolymerisate, α-Methylstyrol-Acrylnitril-Copolymerisate, α-Methylstyrol-Acrylnitril-Methylmethacrylat-Terpolymerisate, Polymethylmethacrylat und Polyvinylchlorid.

Die in den erfindungsgemäßen Pfropfpolymerisaten enthaltenen Kautschuke sind Dienkautschuke, Acrylatkautschuke oder Olefinkautschuke.

Bevorzugte Dienkautschuke sind Polybutadien, Polyisopren, Butadiencopolyperisate mit bis zu 50 Gew.-% Styrol, Acrylnitril, Methylmethacrylat oder Acrylsäurealkylester; gegebenenfalls können in diesen Kautschuken geringe Mengen polyfunktioneller Vinylmonomere eingebaut sein, wie z.B. Divinylbenzol. Besonders bevorzugte Dienkautschuke sind Polybutadiene.

Acrylatkautschuke im Sinne der Erfindung sind Polymerisate von $C_1$-$C_8$-Alkylacrylaten; diese Polymerisate können gegebenenfalls noch in Mengen bis zu 40 Gew.-% Styrol,

Acrylnitril, Methylmethacrylat, Vinylester oder Vinylether eingebaut enthalten.

Die Acrylatkautschuke sind vorzugsweise teilvernetzt; zur Herstellung solcher teil- bis hochvernetzter Acrylatkautschuke können in diese vernetzende Monomere mit mehr als einer copolymerisierbaren Doppelbindung eincopolymerisiert werden; solche vernetzenden Monomeren sind z.B. Ester ungesättigter $C_3$-$C_{12}$-Monocarbonsäuren und ungesättigter $C_2$-$C_8$-Alkohole, Ester gesättigter $C_3$-$C_{12}$-Polycarbonsäuren und ungesättigter $C_2$-$C_8$-Alkohole, Ester ungesättigter $C_3$-$C_{12}$-Monocarbonsäuren und gesättigter $C_2$-$C_{12}$-Polyole, mehrfach-ungesättigte heterocyclische Verbindungen wie Triallylcyanurat, Triallylisocyanurat, polyfunktionelle Vinylverbindungen wie Di-, Trivinylbenzole, Triallylphosphat und auch mehrfach ungesättigte Carbonsäureamide.

Bevorzugte vernetzende Monomere sind Allylmethacrylat, Allylacrylat, Ethylen, Butylenglykoldimethacrylat, Diallylphthalat, Triallylcyanurat, Triallylisocyanurat, Triacryloyl, Hexahydro-s-Triazin, Triallylbenzol.

Die Menge solcher vernetzenden Monomere beträgt normalerweise 0,02 - 5 Gew.-Teile, bezogen auf 100 Gew.-Teile Kautschuk.

Die erfindungsgemäß geeigneten Acrylatkautschuke können auch einen mehrphasigen Aufbau aufweisen, dabei können Partikel von harzartigen Polymerisaten, z.B. Styrol- oder Methylacrylathomo- oder -copolymerisate oder Partikel von kautschukartigen Polymerisaten, z.B. Butadienhomo- oder

-copolymerisate in den Acrylatkautschuk eingeschlossen sein. Bevorzugte Acrylatkautschuke sind teilchenförmig und besitzen einen Schalenaufbau mit einem Kern aus Dienkautschuk, der bis zu 40 Gew.-% ausmacht und einer Hülle aus Acrylatpolymerisat. Solche Acrylatkautschuke sind bekannt.

Erfindungsgemäß geeignete Olefinkautschuke sind Polyethylene, Polypropylene, Ethylen-Propylen-Copolymerisate, die gegegebenenfalls noch geringe Mengen nicht-konjugierter Diene einpolymerisiert enthalten können (sogenannte EPDM-Kautschuke), Ethylen-Vinylacetat-Copolymere, Ethylen-Acrylsäurealkylester-Copolymerisate, die gegebenenfalls noch kleinere Mengen weiterer Comonomere (z.B. Kohlenmonoxyd, Vinylacetat) copolymerisiert enthalten können. Bevorzugte Elastomere im Sinne der Erfindung weisen Gelgehalte >20 Gew.-%, insbesondere >60 Gew.-% auf; sie bestehen bevorzugt aus Teilchen mit mittleren Durchmessern von 0,05 - 8 µm, vorzugsweise 0,1 -0,8 µm ($d_{50}$-Werte).

Die Elastomere sind bekannt und lassen sich nach verschiedenen Verfahren, wie Emulsions-, Suspensions-, Fällungs-, Lösungs-, Massepolymerisation herstellen. Die Elastomere können gegebenenfalls während oder auch nach ihrer Herstellung vernetzt werden.

Erfindungsgemäß besonders als Pfropfbasis geeignete Kautschuke liegen als Emulsion, Dispersion oder Suspension vor. Diese können während der Herstellung der Kautschuke entstanden oder nachträglich durch bekannte Prozesse, wie Emulgierung hergestellt worden sein.

Besonders bevorzugte Kautschuke sind solche, die direkt durch Emulsions-, Dispersions-, oder Suspensionspolymerisation in wenigstens teilvernetztem Zustand anfallen.

Mit "Pfropfastpolymerisat" wird ein Polymerisat bezeichnet, das in Gegenwart eines Kautschuks erzeugt wurde, und von welchem wenigstens ein Teil auf den Kautschuk pfropfpolymerisiert ist. Die Menge des aufgepfropften, d.h. chemisch verbundenen Polymerisates läßt sich durch bekannte Methoden bestimmen; sie ist außerdem durch bekannte Maßnahmen in weiten Bereichen zu steuern: Hier soll unter "Pfropfastpolymerisat" das in Gegenwart des Kautschuks hergestellte Polymerisat verstanden werden, unabhängig von Pfropfgrad[1)] und Pfropfausbeute[2)]. Bevorzugte Pfropfpolymerisate weisen Pfropfausbeuten von >20 Gew.-%, insbesondere >40 Gew.-% auf.

[1)] $$\text{Pfropfgrad} = \frac{\text{Masse chemisch an den Kautschuk gebundenen Pfropfpolymerisats}}{\text{Masse Kautschuk}}$$

[2)] $$\text{Pfropfausbeute} = \frac{\text{Masse chemisch an den Kautschuk gebundenen Pfropfpolymerisats}}{\text{Masse der Pfropfmonomeren}} \cdot 100$$

Das Pfropfastpolymerisat der erfindungsgemäßen Pfropfpolymerisate besteht aus wenigstens einem polymerisierten Monomer der Formel (I) oder (II),

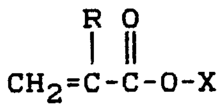

(I)

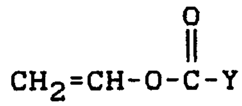

(II)

mit R = H, $CH_3$

X,Y = $C_{14}$-$C_{33}$-Alkyl, insbesondere $C_{17}$-$C_{32}$-Alkyl

und wenigsten einem weiteren, damit copolymerisierten Vinylmonomeren.

Die Monomere der Formel (I) sind Ester der Methacryl- oder Acrylsäure mit langkettigen, aliphatischen Alkoholen mit 14 - 33 C-Atomen. Bevorzugte Alkoholkomponenten der Ester der Formel (I) sind Cetyl-, Stearyl-, Ceryl-, Behenyl- oder Myricylalkohol. Die Monomere der Formel (II) sind Vinylester langkettiger $C_{14}$-$C_{33}$-Carbonsäuren, insbesondere Palmitin- oder Stearinsäurevinylester.

Weitere Vinylmonomere zur Bildung des Pfropfastpolymerisates sind vorzugsweise Styrol, α-Methylstyrol, Acrylnitril, Methacrylnitril, Acrylsäureester mit bis zu 12 C-Atomen in der Alkoholgruppe, Methacrylsäureester mit bis zu 12 C-Atomen in der Alkoholgruppe, Vinylester von $C_1$-$C_6$-

Carbonsäuren, Methacrylsäure, Acrylsäure, Maleinsäureanhydrid oder N-substituierte Maleinimide wie N-Cyclohexyl-, N-Phenylmaleinimid. Besonders bevorzugt sind Methylmethacrylat, Cyclohexylmethacrylat, Kombinationen aus Methylmethacrylat und Styrol, aus Methylmethacrylat, Acrylnitril und Styrol, aus Acrylnitril und Styrol sowie aus Acrylnitril und α-Methylstyrol.

Das Pfropfastpolymerisat besteht vorzugsweise aus 1 - 50 Gew.-%, insbesondere aus 2 - 20 Gew.-% wenigstens eines polymerisierten Monomeren der Formel (I) oder (II) und 99 -50 Gew.-%, insbesondere 98 - 80 Gew.-%, wenigstens eines weiteren polymerisierten Vinylmonomeren.

Die erfindungsgemäßen Pfropfpolymerisate werden durch radikalische Pfropfcopolymerisation von wenigstens einem der genannten weiteren Vinylmonomeren und wenigstens einem der Monomeren der Formel (I) oder (II) in Gegenwart eines Kautschuks hergestellt, wobei das so gebildete Pfropfastpolymerisat wenigstens teilweise auf den Kautschuk aufgepfropft wird. Die Pfropfcopolymerisation wird vorzugsweise bei Temperaturen von 45 - 100$^0$C durchgeführt. Dabei kann mit Radikalinitiatoren wie Persulfaten, Perphosphaten, Peroxiden, Perestern, Azoverbindungen initiiert werden, der Zusatz von Verbindungen wie Mercaptane, Allylverbindungen, Olefine kann sich steigernd auf den Pfropfgrad auswirken.

Ein bevorzugtes Verfahren geht von Emulsionen, insbesondere wäßrigen Emulsionen, eines Kautschuks aus. In Gegenwart dieser Emulsionen werden dann die pfropfastbildenden Monomere radikalisch polymerisiert, vorzugsweise

ebenfalls in Emulsion. Dieses Verfahren ist besonders vorteilhaft, weil sich die Pfropfpolymerisate bei ihrer Isolierung leicht entwässern lassen.

Bei diesem Verfahren wird bevorzugt mit Initiatoren gearbeitet, die im Reaktionsmedium löslich sind. Arbeitet man in Wasser, so werden Initiatoren wie Persulfate, Perphosphate oder wasserlösliche Peroxide verwendet.

Das fertige Pfropfpolymerisat kann nach verschiedenen Verfahren isoliert werden, z. B. durch Sprühtrocknung, direkte Filtration, oder im Falle der Emulsionspolymerisation durch Koagulation der Emulsion, insbesondere bei Temperaturen oberhalb 50°C unter Zuhilfenahme von Säuren, Basen, Salzen, Filtration bzw. Zentrifugation, Waschen und anschließender Trocknung bei Temperaturen von mehr als 50°C.

In manchen Fällen lassen sich die Pfropfpolymerisate direkt aus der Emulsion oder Suspension verarbeiten, indem man in Ausdampfaggregaten gleichzeitig die flüchtigen Begleitstoffe entfernt und das Polymer zu einem Granulat compoundiert, das dann thermoplastisch zu einem Formkörper verarbeitet werden kann.

Die erfindungsgemäßen Pfropfpolymerisate lassen sich thermoplastisch zu hochwertigen Formkörpern verarbeiten. Sie besitzen verbesserte Verarbeitbarkeit, guten Rohton und

hohe Oberflächengüte, sowie Kerbschlagzähigkeit. Sie können mit Styrolhomo- oder -copolymerisaten, Methylmethacrylathomo- oder -copolymerisaten oder Vinylchloridhomo- oder -copolymerisaten gemischt werden, insbesondere mit Styrol/Acrylnitril-Harz, α-Methylstyrol-Acrylnitril-Harz und Polyvinylchlorid. Die so erhaltenen Formmassen bestehen aus 5 - 95 Gew.-Teilen thermoplastischem Harz und 95 -5 Gew.-Teilen Pfropfpolymerisat. Liegt der Kautschukgehalt der Pfropfpolymerisate unter 50 Gew.-%, so sind sie besonders zur thermoplastischen Verarbeitung ohne weiteren Zusatz eines Harzes geeignet. Liegt der Kautschukgehalt der Pfropfpolymerisate $\geq$50 Gew.-%, so eignen sich diese insbesondere zur Mischung mit den genannten thermoplastischen Harzen.

Thermoplastische Formmassen aus thermoplastischem Harz und Pfropfpolymerisat kann man erzeugen, indem man beide Komponenten in der Schmelze mischt.

Wenn das thermoplastische Harz selbst als Emulsion vorliegt, kann man diese Emulsion mit einer Dispersion des Pfropfpolymerisates vermischen und diese Mischung nach den oben beschriebenen Verfahren aufarbeiten.

Die erfindungsgemäßen Formmassen können nach allen bekannten Verfahren der thermoplastischen Verformung, wie Extrusion, Spritzguß, Kalandrierung, Pressen, Walzen,

Folienblasen verarbeitet werden. Den Formassen können bekannte Additive wie Stabilisatoren, Gleitmittel, Flammschutzmittel, Pigmente, Farbstoffe oder Antistatika zugemischt werden.

Die angegebenen Teilchendurchmesser stellen $d_{50}$-Werte dar, und wurden durch Ultrazentrifugationsmessungen ermittelt. (W. Scholtan et al., Colloids Z. Polymere 250 (1972), S. 783 - 796).

## Beispiele

### I. Verwendete Pfropfgrundlagen

I.1 Wässrige Emulsion eines Polybutadiens.
Polymerfeststoffgehalt der Emulsion: 50 Gew.-%.
Mittlerer Teilchendurchmesser ($d_{50}$): 0,38 um
Gelgehalt des Polybutadiens: 89 Gew.-%

I.2 Wässrige Emulsion eines Polybutadiens.
Polymerfeststoffgehalt der Emulsion: 30 Gew.-%
Mittlerer Teilchendurchmesser ($d_{50}$): 0,11 um
Gelgehalt des Polybutadiens: 91 Gew.-%

I.3 Wässrige Emulsion eines Poly-n-Butylacrylates. Die Polymerteilchen enthalten eingelagerte Polybutadienkautschuk-Kerne mit einem Anteil von 1 Gew.-Teil, bezogen auf 100 Gew.-Teile Gesamtelastomer.

Polymerfeststoffkonzentration der Emulsion: 37 Gew.-%
Mittlerer Teilchendurchmesser ($d_{50}$): 0,48 µm
Gelgehalt des Gesamtelastomeren: 85 Gew.-%
Mittlerer Teilchendurchmesser der eingelagerten Polybutadienkerne: 0,1 µm.

Die Herstellung der Elastomeremulsion erfogte nach bekannten Verfahren durch radikalische Emulsionspolymerisation.

## II. Erfindungsgemäße Pfropfpolymerisate und Vergleichsversuche

In einem Reaktor werden vorgelegt

2370 Gew.-Teile Latex I.1
900 Gew.-Teile Wasser

Nach Aufheizung auf 65 - 70° C und Zugabe einer Lösung von 4,5 Gew.-Teilen Kaliumperoxidisulfat in 100 Gew.-Teilen Wasser werden folgende Mengenströme in den Polymerisationssektor eingespeist:

1) 300 Gew.-Tl. Monomermischung
2) 410 Gew.-Tl. Wasser
21 Gew.-Tl. Na-Salz der disproportionierten Abietinsäure
20 Gew.-Tl. 1n-Natronlauge.

Die Gesamtpolymerisationszeit beträgt 10 Stunden bei 65 - 70° C. Anschließend werden die Latices mit 2 Gew.-Tl., bezogen auf 100 Gew.-Tl. Pfropfpolymerisat, phenolischen Antioxidatien stabilisiert und mittels Magnesiumsulfat/Essigsäure-Mischung koaguliert.

Tabelle 1 gibt eine Übersicht über die hergestellten Pfropfpolymerisate:

Tabelle 1: Herstellung von Pfropfpolymerisaten

| Typ | Zusammensetzung der Monomermischung (Gew.-%) | |
|---|---|---|
| II.1 | 100 | MMA |
| II.2 | 97 | MMA |
| | 3 | STMA |
| II.3 | 90 | MMA |
| | 10 | STMA |
| II.4 | 85 | MMA |
| | 15 | STMA |
| II.4 | 82 | MMA |
| | 18 | STMA |

MMA = Methylmethacrylat

STMA = Stearylmethacrylat

Der bei der Koagulation bei 95 - 98°C anfallende Polymersiatbrei wird auf einer Laborschleuder (ø 30 cm, 1400 U/min; Beschickung 1400 g Polymerisat-Trockengewicht) unter konstanten Bedingungen gewaschen (bis zur Elektrolytfreiheit des Waschwassers) und trockengeschleudert. Es ergeben sich folgende Werte:

Tabelle 2:

| Typ | Zeit bis zur Elektrolytfreiheit | Restwassergehalt des Pulvers nach Trockenschleudern in 8 Min. |
|---|---|---|
| II.1 | 20 Min. | 50 Gew.-% |
| II.2 | 15 Min. | 47 Gew.-% |
| II.3 | 15 Min. | 44 Gew.-% |
| II.4 | 14 Min. | 40 Gew.-% |

## III. Erfindungsgemäße Pfropfpolymerisate und Vergleichsversuche

In einem Reaktor werden vorgelegt

2330 Gew.-Tl. Latex I.2
810 Gew.-Tl. Wasser

Bei 70°C wird durch Zugabe einer Lösung von 10 Gew.-Tl.

Kaliumperoxidisulfat in 200 Gew.-Tl. Wasser initiiert, und es werden folgende Mengenströme innerhalb von 5 h in den Reaktor eingespeist:

| | | | |
|---|---|---|---|
| 1) | 2096 | Gew.-Tl. | Monomermischung |
| | 3 | Gew.-Tl. | tert.-Dodecylmercaptan |
| 2) | 2860 | Gew.-Tl. | Wasser |
| | 45 | Gew.-Tl. | Na-Salz der disproportionierten Abietinsäure |
| | 37 | Gew.-Tl. | ln-Natronlauge. |

Anschließend wird innerhalb von 5 h auspolymerisiert. Nach Stabilisierung mit 1,2 Gew.-Tl. Antioxidans (bezogen auf 100 Gew.-Tl. Pfropfpolymerisat) wird mittles Koagulation mit essigsaurer Magnesiumsulfatlösung aufgearbeitet, gewaschen und getrocknet.

Tabelle 3: Übersicht über die Zusammensetzung der Pfropfpolymerisate

| Typ | Zusammensetzung der Monomermischung (Gew.-%) | |
|---|---|---|
| III.1 | 650 | ACN |
| | 1446 | AMS |
| III.2 | 624 | ACN |
| | 1388 | AMS |
| | 84 | STMA |

ACN = Acrylnitril
AMS = α-Methylstyrol
STMA = Stearylmethacrylat

Die Pfropfpolymerisate werden in Kombination mit 0,2 Gew.% Loxiol 670 als Gleitmittel bei 190° C innerhalb 5 Min. auf einer Walze compoundiert und danach bei 195° C zu Formkörpern verpreßt.

Tabelle 4: Eigenschaften der Formkörper

| Typ | Kugeldruckhärte DIN 53456 [MPa 30"] | Kerbschlagzähigkeit DIN 53453 [kg/m²] | Wärmeformbeständigkeit Vicat B DIN 53460 [$0^0$ C] | Rohton 1) |
|---|---|---|---|---|
| III.1 | 85 | 13,8 | 110 | + |
| III.2 | 88 | 14,0 | 112 | +++ |

1) Rohton visuell beurteilt (+ = leicht gelb, +++ = kein Gelbstich)

IV: Erfindungsgemäße Pfropfpolymerisate und Vergleichsversuche

In einem Reaktor werden vorgelegt:

4867 Gew.-Tl. Latex II.3
717 Gew.-Tl. Wasser.

Nach Initiierung bei 65°C mit einer Lösung von 6 Gew.-Tl. Kaliumperoxiddisulfat in 290 Gew.-Tl. Wasser werden bei 68 - 70°C folgende Mengenströme in den Reaktor eingespeist:

1) 1800 Gew.-Tl. Monomermischung
2) 30 Gew.-Tl. Na-Salz von $C_{12}$-$C_{18}$-Alkylsulfonsäuren
2872 Gew.-Tl. Wasser.

Nach einer Nachpolymerisationszeit von 4 h und einer Gesamtpolymerisationszeit von 11 h wird der anfallende Pfropfpolymerlatex mit 1 Gew.-%, bezogen auf 100 Gew.-Tl. Polymerisat, phenolischem Antioxidant stabilisiert und mittels Magnesiumsulfat-Lösung koaguliert, gewaschen und zu einem Pulver getrocknet.

Tabelle 5: Übersicht über die Zusammensetzung der Pfropfpolymerisate

| Typ | Zusammensetzung der Monomermischung (Gew.-%) | |
|---|---|---|
| IV.1 | 1296 | S |
| | 504 | ACN |
| IV.2 | 1231 | S |
| | 479 | ACN |
| | 90 | STMA |
| IV.3 | 1231 | S |
| | 479 | ACN |
| | 90 | VST |

S = Styrol, ACN = Acrylnitril, STMA = Stearylmethacrylat,
VST = Vinylstearat

Die in Tab. 6 angegebenen Formmassen werden durch Compoundierung auf einem Banbury-Mischer (Pomini-Farrel) unter folgenden Mischbedingungen hergestellt:

Massetemperatur: 190 - 225° C
Mischzeiten: 1,5 - 2 Min.
Cycluszeiten: 2 - 4 Min.

Das Mischgut fällt aus dem Banbury-Mischer auf einen Zweiwalzenstuhl (Walze 1: T = 160° C, Walze 2: T = 150° C), wird in Form eines Bands abgenommen und nach der Abkühlung granuliert.

Tabelle 6: Thermoplastische Mischungen

| Typ | Pfropfpolymerisat Gew.-Tl. | Harz Gew.-Tl. | Gleitmittel Gew.-Tl. |
|---|---|---|---|
| A | 40 IV.1 | 60 SAN | 3 AC |
| B | 40 IV.2 | 60 SAN | 3 AC |
| C | 40 IV.3 | 60 SAN | 3 AC |

AC = Bisstearylamid des Ethylendiamins

SAN = Styrol-Acrylnitril-Copolymer mit einem ACN-Gehalt von 26 Gew.-% und einem Staudinger-Index $[\eta]$ = 0,7 dl/g (DMF, 25° C)

Die in Tab. 6 angegebenen Formmassen werden durch Spritzguß bei 220° C zu Normkleinstäben verarbeitet und diese nach DIN-Methoden untersucht (Tab. 7).

Tabelle 7: Eigenschaften der Formmassen

| Formasse | Kerbschlagzähigkeit 23°C [kg/m²] | Kugeldruckhärte [30 s] | Wärmeformbeständigkeit Vicat B [°C] | Rohton [1] |
|---|---|---|---|---|
| A | 10,9 | 92 | 92 | + |
| B | 10,8 | 94 | 94 | ++ |
| C | 11,0 | 95 | 94 | ++ |

1) Rohton visuell beurteilt (vgl. Tabelle 4)

## Patentansprüche

1) Thermoplastische Pfropfpolymerisate aus einem Kautschuk mit einer Glasübergangstemperatur kleiner 0° C als Pfropfgrundlage und einem Pfropfastpolymerisat aus wenigstens einem Vinylmonomeren und wenigstens einem Monomeren der Formel (I) oder (II)

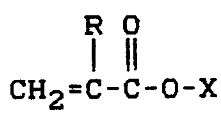

(I)

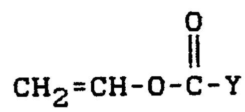

(II)

wobei R = H, $CH_3$ und
X,Y = $C_{14}$-$C_{33}$-Alkyl

bedeutet.

2) Pfropfpolymerisate nach Anspruch 1, dadurch gekennzeichnet, daß sie als Pfropfgrundlage einen teilchenförmigen, wenigstens partiell vernetzten Kautschuk mit mittleren Teilchendurchmessern von 0,05 - 8 um ($d_{50}$ - Werte) enthalten.

3) Pfropfpolymerisate nach Anspruch 1, dadurch gekennzeichnet, daß sie 10 - 80 Gew.-Tl. Kautschuk als Pfropfgrundlage und 90 - 20 Gew.-Tl. Pfropfastpolymerisat enhalten, wobei das Pfropfastpolymerisat aus

1 - 50 Gew.-% wenigstens eines Monomeren der Formel (I) oder (II) und aus 99 - 50 Gew.-% wenigstens eines anderen Vinylmonomeren aufgebaut ist.

4) Propfpolymerisat nach Anspruch 3, dadurch gekennzeichnet, daß die anderen Vinylmonomeren Styrol, α-Methylstyrol, Acrylnitril, Methacrylnitril, Acrylsäureester mit bis zu 12 C-Atomen in der Alkoholgruppe, Methacrylsäureester mit bis zu 12 C-Atomen in der Alkoholgruppe, Vinylester von $C_1$-$C_6$-Carbonsäuren, Methacrylsäure, Acrylsäure, Maleinsäureanhydrid oder Maleinsäureimide sind.

5) Thermoplastische Formmassen aus 5 - 95 Gew.-Tl. eines thermoplastischen Styrolhomo- oder -copolymerisates, eines Methylmethacrylathomo- oder Copolymerisates oder eines Vinylchloridhomo- oder Copolymerisates und 95 -5 Gew.-Tl. Pfropfpolymerisat gemäß Ansprüchen 1 - 4.